# EUROPÄISCHE PATENTSCHRIFT

(11) **EP 1 100 329 B1**
(45) Veröffentlichungstag und Bekanntmachung des Hinweises auf die Patenterteilung: **12.11.2003**
(21) Anmeldenummer: 99934661.2
(22) Anmeldetag: 12.07.1999
(51) Int. Cl.: A01N 33/12, A01N 43/40

(54) **WACHSTUMSREGULIERENDE WÄSSRIGE ZUSAMMENSETZUNGEN**
AQUEOUS GROWTH-REGULATING COMPOSITIONS
COMPOSITIONS AQUEUSES REGULANT LA CROISSANCE

(30) Priorität: 31.07.1998 DE 19834543
(43) Veröffentlichungstag der Anmeldung: 23.05.2001
(73) Patentinhaber: BASF AKTIENGESELLSCHAFT, 67056 Ludwigshafen (DE)
(72) Erfinder: KOBER, Reiner, D-67136 Fu gönheim (DE); RADEMACHER, Wilhelm, D-67117 Limburgerhof (DE); HÖPPNER, Peter, D-67434 Neustadt (DE); KIESSLING, Ulrich, D-67141 Neuhofen (DE); SCHOLZ, Jürgen, D-68163 Mannheim (DE); BERGHAUS, Rainer, D-67346 Speyer (DE); BORZYK, Oliver, D-67346 Speyer (DE); OETTER, Günter, D-67227 Frankenthal (DE)
(74) Vertreter: Kinzebach, Werner, Dr.
(86) Internationale Anmeldenummer: EP9904871
(87) Internationale Veröffentlichungsnummer: WO00007445

(56) Entgegenhaltungen:
- US-A- 4 525 200
- US-H- H 224

## Beschreibung

Gegenstand der vorliegenden Erfindung sind wäßrige, homogene Zusammensetzungen in Form von Wirkstoffkonzentraten zur Beeinflussung des Pflanzenwachstums mit einer Wirkstoffkonzentration von mindestens 20 %, sowie die Verwendung dieser Wirkstoffkonzentrate zur Herstellung von wäßrigen Sprühlösungen mit erhöhter Wirksamkeit.

Wirkstoffe, die das Pflanzenwachstum beeinflussen, können praktisch alle Entwicklungsstadien einer Pflanze verschiedenartig beeinflussen und werden deshalb als Wachstumsregulatoren eingesetzt. Derartige Wirkstoffe besitzen eine Reihe der verschiedenartigen Anwendungsmöglichkeiten, beispielsweise im Pflanzenanbau, in der Landwirtschaft und im Gartenbau. Mit ihrer Hilfe läßt sich das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so daß der arbeits- und kostenaufwendige Rasenschnitt reduziert werden kann.

Von wirtschaftlichem Interesse ist auch die Erhöhung der Standfestigkeit von lageranfälligen Kulturen wie Getreide, Mais und Sonnenblumen. Die dabei verursachte Halmverkürzung und Halmverstärkung verringern oder beseitigen die Gefahr des "Lagerns" (des Umknickens) von Pflanzen unter ungünstigen Witterungsbedingungen vor der Ernte. Wichtig ist auch die Anwendung von Wachstumsregulatoren zur Hemmung des Längenwachstums und zur zeitlichen Veränderung des Reifeverlaufs bei Baumwolle. Damit wird ein vollständig mechanisiertes Beernten dieser Kulturpflanze ermöglicht. Bei Obst- und anderen Bäumen lassen sich mit den Wachstumsregulatoren Schnittkosten einsparen. Außerdem kann die Alternanz von Obstbäumen durch Wachstumsregulatoren gebrochen werden. Durch Anwendung von Wachstumsregulatoren kann auch die seitliche Verzweigung der Pflanzen vermehrt oder gehemmt werden. Daran besteht Interesse, wenn z. B. bei Tabakpflanzen die Ausbildung von Seitentrieben (Geiztrieben) zugunsten des Blattwachstums gehemmt werden soll. Mit Wachstumsregulatoren läßt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen in der vegetativen Entwicklung zurückgehalten. Dadurch wird auch die Frostgefährdung solcher Pflanzen beseitigt, die zum vorzeitigen Abbau der Blühhemmung und zum Übergang in die generative Phase neigen. Auch bei anderen Kulturen, z. B. Wintergetreide ist es vorteilhaft, wenn die Bestände durch Behandlung mit Wachstumsregulatoren im Herbst zwar gut bestockt werden, aber nicht zu üppig in den Winter hineingehen. Dadurch kann der erhöhten Frostempfindlichkeit und -wegen der relativ geringen Blatt- bzw. Pflanzenmasse - dem Befall mit verschiedenen Krankheiten (z. B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

Mit Hilfe von Wachstumsregulatoren lassen sich die Mehrerträge sowohl an Pflanzenteilen als auch an Pflanzeninhaltsstoffen erzielen. So ist es beispielsweise auch möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluß zu stimulieren. Dabei können die Wirkstoffe Ertragssteigerungen durch Eingriffe in den pflanzlichen Stoffwechsel bzw. durch Förderung oder Hemmung des vegetativen und/oder des generativen Wachstums verursachen. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blattund Sproßteil der Pflanze ist auch für ein gut kontrolliertes Entblättern von Nutzpflanzen wie beispielsweise Baumwolle wesentlich.

Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz von Wachstumsregulatoren läßt sich die Intensität der Bewässerung reduzieren und damit eine kostengünstigere Bewirtschaftung durchführen. Unter dem Einfluß von Wachstumsregulatoren kommt es zu einer besseren Ausnutzung des vorhandenen Wassers, weil u. a. die Öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflußt wird.

Als wachstumsregulierende Wirkstoffe werden auf dem Gebiet der Landwirtschaft unter anderem N,N,N-Trimethyl-N-β-chlorethyl-ammoniumchlorid (CCC, Chlorcholin-chlorid, Chlormequat, DE 12 94 734), N,N-Dimethylmorpholiniumchlorid (DMC, DE 16 42 215) und N,N-Dimethylpiperidiniumchlorid (DPC, MQC, Mepiquatchlorid, DE 22 07 575) eingesetzt. Diese Wirkstoffe, insbesondere Chlormequat-Chlorid und Mequat Chlorid, werden typischerweise im Getreideanbau in vergleichsweisen hohen Anwendungskonzentrationen eingesetzt. Die Aufwandmenge dieser Wirkstoffe pro Applikation beträgt in der Regel 0,3 - 1,5 kg/ha. Die Produkte sind als wäßrige Wirkstoffkonzentrate, Tabletten oder Granulate (z.B. PIX®, PIX® DF, BASF Corporation) im Handel erhältlich.

Die US 4,525,200 beschreibt wasserlösliche quartäre Ammoniumsalze, wie CCC, als Wachstumsregulatoren im Gemsich mit nichtionischen Tensiden. Die US H 224 beschreibt Dispersionen, Emulsionen und Zusammensetzungen in Substanz von wachstumsregulierenden Wirkstoffen und Glycosiden als Dispersionsmittel. Wässrige homogene Zusammensetzungen werden nicht erwähnt.

Im Hinblick auf die Tatsache, daß die Wirkstoffe in relativ hohen Aufwandmengen verwendet werden, besteht ein Bedürfnis nach möglichst hochkonzentrierten Wirkstoffformulierungen, die kurz vor der Anwendung mit der erforderlichen Menge an Wasser verdünnt werden. Hochkonzentrierte Wirkstofflösungen sind jedoch problematisch, da den Formulierungen in der Regel unterschiedliche Zusatzstoffe zur Stabilisierung und/oder zur Wirkungssteigerung zugesetzt werden müssen. Als Folge davon kommt es häufig zu Inkompatibilitäten der einzelnen Zusatzstoffe und/oder Wirkstoffe untereinander, so daß instabile Formulierungen erhalten werden, die durch das Auftreten von Trübungen, Ausfallen der Zusatz- oder Wirkstoffe oder durch geringe Lagerstabilität gekennzeichnet sind. Falls die Gesamtkonzentration an Zusatz- und Wirkstoffen einen bestimmten Maximalwert überschreitet, treten oft weitere nachteilige Effekte auf, wie beispielsweise Phasentrennungen, Sedimentationen oder stärkere Trübungen. Diese Mischunverträglichkeit macht sich entweder direkt durch das Auftreten eines Zweiphasen-Systems bemerkbar, oder führt längerfristig zu einer geringeren Lagerstabilität der Lösungen. Unter diesen Umständen ist es oft nicht mehr möglich, die gewünschten bzw. erforderlichen Zusatzstoffe in ihrer Gesamtheit der Fertigformulierung beizufügen, so daß die Zusatzstoffe dem Verbraucher in separaten Behältnissen zur Verfügung gestellt werden müssen. Der Verbraucher mischt die Konzentrate zusammen mit den weiteren Additiven, verdünnt sie mit Wasser und fügt sie dem Tank- oder Spritzbehälter kurz vor der Anwendung bei. Dies stellt im Prinzip einen Nachteil in der Handhabung derartiger Formulierungen dar, da ein zusätzlicher Arbeitsschritt erforderlich ist. Bei unsachgemäßer und fahrlässig fehlerhafter Anwendung (z.B. Mischungsfehler, Verdünnungsfehler, etc.) ist darüber hinaus eine sicherer und optimaler Einsatz des Pflanzenschutzmittels nicht gewährleistet.

Eine alternative Möglichkeit zur Herstellung von hochkonzentrierten Lösungen besteht darin, anstelle von Wasser organische Lösungsmittel zur Herstellung von hochkonzentrierten Lösungen der eingangs genannten Wirkstoffe zu verwenden. Dies ist jedoch unter ökologischen Gesichtspunkten nicht wünschenswert. In WO 96/22020 und DE 44 45 546 werden beispielsweise wirkungssteigernde, nicht wasserlösliche Öle und Ester, wie z.B. Ester der Adipinsäure, Öl- oder Stearinsäure, beschrieben, die als Tank-Mix-Additive zur Herstellung von Formulierungen vom Typ O/W (Ölin-Wasser) verwendet werden können. Diese Formulierungen haben jedoch im Fall der eingangs genannten Wirkstoffe den Nachteil, daß es nur sehr schwer gelingt, die ölphase hinsichtlich einer Separierung der Öl/Wasser/-Phase zu stabilisieren, da geeignete Verdickungsmittel, z.B. aus der Xanthan-Reihe, in aller Regel bei Anwesenheit hoher Elektrolyt-Anteile nicht ausreichend wirken.

Die Herstellung von preiswerten und einfachen Feststoff-Formulierungen ist ebenfalls nicht ohne weiteres möglich, da die Wirkstoffe sehr hygroskopisch sind und somit einen hohen Anteil von Additiven zur Stabilisierung bzw. zur Wirkungssteigerung erfordern. In Anbetracht der daraus resultierenden hohen Mengen an Pflanzschutzmitteln sind derartige Feststoff-Formulierungen von Nachteil.

Aufgabe der vorliegenden Erfindung war es, stabile, homogene Wirkstoffkonzentrate auf wäßriger Basis zur Verfügung zu stellen, die sich durch einen möglichst hohen Wirkstoffanteil auszeichnen und ferner einen wirkungssteigernden Anteil von Additiven enthalten. Die Wirkstoffkonzentrate sollten eine einfache, sichere und effiziente Anwendung durch den Endverbraucher ermöglichen.

Die Aufgabe wird dadurch gelöst, indem wäßrige, wirkstoffhaltige Zusammensetzungen in Form von Wirkstoffkonzentraten mit einer Wirkstoffkonzentration von mindestens 20 % zur Verfügung gestellt werden, enthaltend
a) mindestens einen Wirkstoff der Formel I 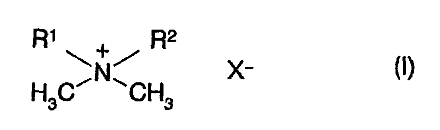 und
b) mindestens einen Hilfsstoff ausgewählt aus der Gruppe der
   b1) Alkylglucoside oder
   b2) Alkylsulfonate oder Alkylarylsulfonate der Formel II

      R³-SO₃⁻ M^{(+,++)} (II),

      wobei R³ eine aliphatische Gruppe mit 6-24 Kohlenstoffatomen, C₆-C₁₆-Alkyl-phenoxy-polyethoxy, C₁-C₁₆-Alkyl-phenyl, C₁-C₁₆-Alkyl-naphthyl und M eine ein- oder zweiwertige kationische Gruppe bedeutet.
   Überraschenderweise wurde gefunden, daß durch den Zusatz eines Hilfsstoffes aus der Gruppe der unter Punkt b1) oder b2) genannten Hilfsstoffe einphasige wässrige, homogene Wirkstoff-Formulierungen erhalten werden. Die Konzentration der Wirkstoffe in der Lösung beträgt bis zu 70 %, bevorzugt bis zu 60 % oder 50 % (im folgenden beziehen sich die Prozentangaben jeweils auf Gewichtsprozente, soweit nichts anderes angegeben ist). Die Lösungen werden insbesonders als Konzentrate mit einer Wirkstoffkonzentration von mindestens 20 %, bevorzugt mindestens 30 % oder 40 % zur Verfügung gestellt. Derartige konzentrierte einphasige Wirkstofflösungen konnten bisher nicht hergestellt werden, da der zusatz üblicher Additive zu zweiphasigen Systemen (Phasentrennung) führte. Die erfindungsgemäßen Formulierungen hingegen zeichnen sich durch eine sehr gute Mischverträglichkeit zwischen den einzelnen Zusatzstoffen und den Wirkstoffen der Formel I aus. Die resultierenden Zusammensetzungen sind stabil, homogen und einphasig.

Ferner wurde überraschenderweise gefunden, daß die erfindungsgemäß ausgewählten Zusatzstoffe (vgl. die eingangs unter b1) oder b2) definierten Gruppen) die biologische Wirkung der Verbindungen der Formel I verstärken. Außerdem dienen sie als Lösungsvermittler für oberflächenaktive Substanzen, insbesondere für nicht-ionische Tenside. Dies ermöglicht einen erhöhten Zusatz dieser Additive zu den Flüssigformulierungen. Ein erhöhter Zusatz ist von Vorteil, da hierdurch eine weitere Wirkungsverstärkung der Verbindungen der Formel I im Vergleich zu Formulierungen, die diese Additive nicht enthalten, erzielt wird. Auf diese Weise kann die erforderliche Aufwandmenge der Wirkstoffe der Formel I in der Landwirtschaft deutlich reduziert werden. Beispielsweise konnte eine Reduktion der Wirkstoffmenge um mindestens 10 %, teilweise sogar um mindestens bis zu 30 % bzw. mindestens bis zu 50 % bei vergleichbarer biologischer Wirkung erzielt werden. In Ausnahmefällen ist sogar eine Reduktion um bis zu 80 % der Aufwandmenge möglich. Die Aufwandmenge an Wirkstoff kann so beispielsweise bei Getreide auf einen Wert von 0,1 - 1,5 kg/ha reduziert werden. Im Falle des Sommerweizens konnte so zum Beispiel ein vergleichbarer biologischer Effekt (Wuchshöheneinkürzung) mit einer Aufwandmenge von 0,5 kg/ha des Wirkstoffes erreicht werden, während ohne den Zusatz der erfindungsgemäßen Additive noch eine Aufwandmenge von 2 kg/ha erforderlich war, um eine vergleichbare Wirkung zu erzielen. Dies entspricht einer Reduktion der Aufwandmenge um 75 %. Die entsprechende Aufwandmenge für beispielsweise Baumwolle beträgt 0,001 - 0,1 kg/ha. Grundsätzlich ist die Aufwandmenge bei verschiedenen Pflanzen unterschiedlich und wird den jeweiligen Bedürfnissen und klimatischen Verhältnissen angepaßt. Mit Hilfe der erfindungsgemäßen Zusammensetzungen wird jedoch in allen Fällen eine entsprechende Reduzierung der im Vergleich zur sonst üblichen Aufwandmenge erzielt. Ein weiterer Vorteil der erfindungsgemäßen Formulierungen besteht darin, daß der Anteil an weiteren Additiven erniedrigt werden kann bzw. nicht mehr erforderlich ist. Bevorzugt bestehen die erfindungsgemäßen Konzentrate im wesentlichen aus einem Wirkstoff der Formel I, einem der genannten Hilfsstoffe b1) - b2) oder Mischungen dieser Hilfsstoffe, und Wasser, in Abwesenheit von weiteren Zusatzstoffen.

Die Verwendung der erfindungsgemäß ausgewählten Zusatzstoffe ermöglicht die Herstellung von Fertigformulierungen der Wirkstoffe der Formel I, die ferner insbesondere nicht-ionische Tenside, wie z.B. Ethylenoxid-Propylenoxid-Blockpolymere, enthalten. Die Herstellung von Fertigformulierungen, die nicht-ionische Tenside enthalten, war bisher nur mit Schwierigkeiten möglich. Die erfindungsgemäßen Zusatzstoffe fungieren überraschenderweise als hervorragende Lösungsvermittler für diese nicht-ionischen Tenside. So ermöglicht beispielsweise die Verwendung eines 10 - 30 %igen Anteils der erfindungsgemäßen Zusatzstoffe, daß 10 - 30 % an weiteren wirkungssteigernden Additiven in diesen Fertigformulierungen enthalten sein können. Der weitere Zusatz derartiger Additive als sog. Wetter, Spreiter, Netzmittel oder anderen Hilfsmitteln, beschleunigt die Aufnahme von Wirkstoffen in den Blättern der Pflanzen, und ermöglichen somit einen geringeren Einsatz der Pflanzenschutzmittel.

Die erfindungsgemäßen Formulierungen sind ferner unter ökologischen Gesichtspunkten vorteilhaft, da es sich im Fall der Alkylglucoside um Zusatzstoffe handelt, die aus in der Natur nachwachsenden Rohstoffen (Zucker) hergestellt werden. Alkylglucoside bestehen aus einem hohen Anteil an Hexosen, die in der Natur schnell abgebaut werden und somit unter dem Aspekt der Umweltverträglichkeit bei der Anwendung in der Landwirtschaft besonders vorteilhaft sind. Auf diese Weise kann die Ausbringung von rein synthetischen Zusatzstoffen auf den Freilandflächen reduziert werden.

Aufgrund der Tatsache, daß die erfindungsgemäßen Formulierungen die Wirkstoffe in hohen Konzentrationen enthalten, können letztlich auch Verpackungskosten, Transportkosten oder Lagerhaltungskosten im Vergleich zu den üblicherweise in größeren Mengen anzuwendenden Pflanzenschutzmitteln eingespart werden.

Im Sinne der vorliegenden Erfindung werden als Wirkstoffe Verbindungen der Formel I eingesetzt, 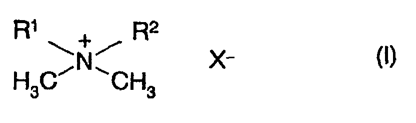 wobei R¹, R² und X die folgenden Bedeutungen haben:
- R¹: C₁-C₄-Alkyl;
- R²: C₁-C₄-Alkyl, Cyclopentenyl, Halogen-C₁-C₆-alkyl;
oder R¹ und R² zusammen einen Rest -(CH₂)₅-, -(CH₂)₂-O-(CH₂)₂- oder
-(CH₂)-CH=CH-(CH₂)-NH- darstellen;
- X: eine anionische Gruppe.

Als C₁-C₄-Alkyl-gruppe kommen beispielsweise in Frage: Methyl, Ethyl, Isopropyl. Als Halogen-C₁-C₆-alkylgruppe ist die 2-Chlorethylgruppe bevorzugt. R¹ und R² bilden bevorzugt zusammen mit dem Stickstoffatom, an das sie gebunden sind, eine Morpholino- oder Piperidinogruppe. X bedeutet beispielsweise ein Halogenid, wie Chlorid, Bromid; Sulfat; C₁-C₄-Alkylsulfat, wie Methylsulfat; C₁-C₄-Alkylsulfonat, wie Methylsulfonat; oder eine andere in der Landwirtschaft nutzbare anionische Gruppe. Grundsätzlich kommen auch zweiwertige anionische Gruppen in Frage, die in den entsprechenden stöchiometrischen Mengen zum Ammoniumkation eingesetzt werden. Bevorzugte Wirkstoffe der Formel I sind N,N,N-Trimethyl-N-β-chlorethyl-ammoniumchlorid (CCC, Chlorcholin-chlorid, Chlormequat), N,N-Dimethylmorpholiniumchlorid (DMC) und N,N-Dimethylpiperidiniumchlorid (DPC, MQC, Mepiquatchlorid).

Bei den erfindungsgemäß ausgewählten Zusatzstoffen handelt es sich um wasserlösliche Zusatzstoffe, die einen stabilisierenden und/oder wirkungsverstärkenden Einfluß auf die Wirkstoffe der Formel I besitzen. Im Sinne der vorliegenden Erfindung kommen diesbezüglich Alkylglucoside (vgl. die eingangs unter Punkt b1) definierte Gruppe) und/oder Alkylsulfonate oder Alkylarylsulfonate (vgl. die eingangs unter Punkt b2) definierte Gruppe), in Frage.

Alkylglucoside (in der Literatur häufig auch als Alkylpolyglucoside bezeichnet) ist eine Sammelbezeichnung für die durch sauer katalysierte Reaktion von Glucose oder Stärke und Alkohol (sog. Fischer-Reaktion) zugänglichen komplexen Umsetzungsprodukten, deren Zusammensetzung vor allem durch das Umsetzungsverhältnis von Glucose zu Alkohol bestimmt wird. Eine Hauptkomponente der Alkylglucoside ist das Alkylmonoglucosid, ein Gemisch aus Alkyl-α-D- und Alkyl-β-D-glucopyranosid und geringen Anteilen des entsprechenden Glucofuransosids. In unterschiedlichen Mengen liegen ferner entsprechende Alkyl-diglucoside (Isomaltoside, Maltoside, etc.), Alkyl-oligoglucoside (Maltotrioside, Maltotetraoside, etc.), sowie oligomere bzw. polymere Glucose vor. Die Alkylglucoside können Monoglucoside oder Polyglucoside bzw. Mischungen davon sein. Die Glucosideinheit läßt sich hierbei durch die Formel R-O-S kennzeichnen, wobei S eine Saccharidgruppe darstellt, und R eine gesättigte oder ein- oder mehrfach ungesättigte, verzweigte oder nicht-verzweigte Alkylgruppe mit 4 - 24 Kohlenstoffatomen ist. Die längerkettigen Alkylglucoside werden in der Literatur auch als Fettalkyl-glucoside (abgeleitet von den entsprechenden Fettalkoholen) bezeichnet. Die Saccharideinheiten leiten sich ab von folgenden Zuckereinheiten: Fructose, Glucose, Mannose, Galactose, Telose, Gulose, Allose, Altrose, Idose, Arabinose, Xylose, Lyxose und/oder Ribose, sowie deren Mischungen. Die Gruppe S leitet sich üblicherweise von Glucoseeinheiten ab, so daß die Produkte demzufolge als Glucoside bezeichnet werden. Der Polymerisationsgrad der Alkylglucoside beträgt in der Regel 1,1 - 8, bevorzugt 1,3 - 2. Die Alkylglucoside fallen produktionstechnisch in der Regel als ca. 50 - 70 %-ige wäßrige Konzentrate an. Sie enthalten je nach Herstellprozeß geringe Mengen an Butyl-glucosid, nicht umgesetzten Alkoholen bzw. Fettalkoholen, Kohlenhydrate oder Oligo-Kohlenhydrate. Eine Reihe von Alkyglucosiden ist im Handel erhältlich (beispielsweise unter den Markenbezeichnungen APG 225, APG 300, Triton® BG, Lutensol® GD 70 (N-Decyl-α-D-glucopyranosid, BASF AG), AG 6202(ein 2-Ethyl-hexylglucosid, Akzo). Weitere Alkylglucoside sind beispielsweise klassifiziert unter CAS-Reg.Nr. 29781-81-5; 29781-80-4; 59947-99-8; 54549-23-4. Verfahren zur Herstellung von Alkylglucosiden werden beschrieben in WO 94/21665; EP 0 635 022 und EP 0 616 611.

Bevorzugte Hilfsstoffe aus der Gruppe der Alkylglucoside (Gruppe b1)) sind im Sinne der vorliegenden Erfindung beispielsweise die folgenden: AG 6202 (2-Ethyl-hexyl-glucosid); Lutensol®, insbesondere Lutensol® GD 65 oder Lutensol® GD 70 (ein Fettalkohol-glucosid); Simusol®, insbesondere Simusol® SL 8 (ein Alkyl-glucosid, CAS-Nr. 68515-73-1) oder Simusol® SL 62 (ein Alkyl-glucosid).

Alkylsulfonate und Alkylarylsulfonate im Sinne der vorliegenden Erfindung sind Verbindungen der Formel II

R³-SO₃⁻ M^{(+,++)} (II),

wobei R³ eine aliphatische Gruppe mit 6-24 Kohlenstoffatomen darstellt, die geradkettig oder verzweigt, gesättigt oder ein- oder mehrfach ungesättigt sein kann, oder eine C₆-C₁₆-Alkyl-phenoxy-polyethoxy-gruppe mit bis zu 50 Oligo- bzw. Polyethoxy-Einheiten bedeutet. Verbindungen der Formel II im Sinne der vorliegenden Erfindung sind beispielsweise Alkylsulfonate, Fettalkylsulfonate, Alkylarylsulfonate, Fettalkylarylsulfonate oder Alkylphenol-polyoxy-ethersulfate. Bevorzugt kommen ausgewählte aliphatische Sulfonate, Alkylarylsulfonate oder Alkyl-phenoxy-Ethersulfate in Frage. M steht für eine ein- oder zweiwertige kationische Gruppe, beispielsweise Ammonium, Natrium, Kalium, Magnesium oder Calcium. Bevorzugte Hilfsstoffe aus der Gruppe der Alkylsulfonate und Alkylarylsulfonate (Gruppe b2)) sind im Sinne der vorliegenden Erfindung beispielsweise die folgenden: Wettol®, insbesondere Wettol® EM 1 (Dodecylbenzolsulfosäure-Ca-Salz) oder Wettol® EM 11 (Ca-Alkylarylsulfonat); Emulphor®, insbesondere Emulphor® OPS 25 (Octylphenol-(EO)₂₅-sulfat, Na-Salz); Lutensit® insbesondere Lutensit® A-E S (Isononylphenol-tetraethoxysulfat, Na-Salz), Lutensit® A-LBA oder Lutensit® A-PS (Alkylsulfonat, Na-salz); ALBN 50 (Dodecylbenzolsulfonat, Na-Salz).

Weiterhin können die erfindungsgemäßen Zusammensetzungen quarternäre Ammoniumsalze der Formel III enthalten 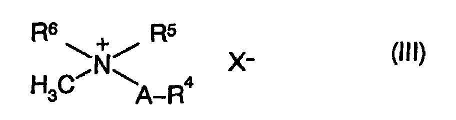 mit folgenden Bedeutungen:
- R⁴: C₆-C₂₄ Alkyl;
- R⁵: Wasserstoff, C₁-C₂₄ Alkyl-, Benzyl, C₁-C₁₂-Alkyl-benzyl oder Hydroxy-Polyethoxy-ethyl,
- R⁶: hat die gleiche Bedeutung wie R⁵, wobei R⁵ und R⁶ gleich oder verschieden sein können,
- A: C₁-C₆-Alkylen oder C₁-C₆-Alkylenaminocarbonyl,
- X: eine anionische Gruppe, beispielsweise Chlorid, Sulfat, Methosulfat, C₂-C₁₆-Alkyl-Sulfonat, C₂-C₁₆-Alkylsulfat, Phenylsulfonat, Naphthylsulfonat, C₁-C₂₄-Alkyl-phenyl-sulfonat, C₁-C₂₄-Alkyl-naphthyl-sulfonat.

Die oben genannten längerkettigen Alkylgruppen ab 8 Kohlenstoffatome werden in der Literatur auch als Fettalkylgruppen bezeichnet. In der Definition von R⁵ und R⁶ stellen Hydroxy-polyethoxy-Ethyl-Gruppen bevorzugt solche Gruppen mit einer Kettenlänge von 0 - 10 Einheiten dar. In der Definition von A ist eine Alkylengruppe bevorzugt eine Methylen-, Ethylen- oder Propylengruppe.

Bevorzugte quarternäre Ammoniumsalze sind beispielsweise die folgenden: Rewoquat®, insbesondere Rewoquat® CPEM (Cocospentaethoxymethyl-ammonium-methosulfat) oder Rewoquat® RTM 50 (Ricinolsäure-propylamido-trimethyl-ammonium-methosulfat); Protecol®, insbesondere Protecol® KLC 50 (Dimethyl-n-alkylbenzyl-ammoniumchlorid).

Die erfindungsgemäßen Zusammensetzungen können ferner noch einen oder mehrere der folgenden Zusatzstoffe a) - d) enthalten:
a) bis zu 30 %, insbesondere bis zu 25 % anionische, kationische oder nicht-ionische Tenside.
b) bis zu 35 %, insbesondere bis zu 20 % an anorganischen Ammoniumsalzen, wie Ammoniumsulfat, Ammoniumnitrat, Ammoniumchlorid, Ammoniumphosphat oder weitere pflanzenverwertbare Mineralien oder Spurenelemente.
c) bis zu 30 %, insbesondere bis zu 20 % an geradkettigen oder verzweigten C₃-C₁₂-Alkylcarbonsäuren, C₃-C₁₂-Di- oder Tricarbonsäuren, wie beispielsweise Propionsäure, Pelargonsäure oder 2-Ethyl-hexansäure, und deren landwirtschaftlich nutzbaren Alkali- oder Erdalkalimetall- oder Ammoniumsalze, wie z.B. Kalium oder Calciumsalze.
d) bis zu 40 %, insbesondere bis zu 25 % an weiteren Wirkstoffen aus dem Pflanzenschutzbereich, wie z.B. weitere wachstumsregulierende Wirkstoffe, insbesondere Ethephon.

Die erfindungsgemäßen Zusammensetzungen enthalten maximal bis zu 70 % Wasser, bevorzugt bis zu 50 % oder bis zu 30 % Wasser, bezogen auf das Gesamtgewicht der flüssigen Formulierung. Bevorzugt beträgt der prozentuale Wasseranteil 20 - 40 %, bezogen auf das Gesamtgewicht der Formulierung.

Als Tenside im Sinne der unter oben unter Punkt a) genannten Zusatzstoffe kommen übliche, in der Landwirtschaft einsetzbare oberflächenaktive Substanzen in Frage. Beispielhaft seien die folgenden genannt: Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäure mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylen-oxid-Kondensate, ethoxyliertes Rizinusöl, Polyoxyethylenalkylether oder Polyoxypropylenalkylether, Laurylalkohol-polyglykolether-acetat. Sorbitester, Lignin-Sulfitablaugen oder Methylcellulose in Betracht.

Die erfindungsgemäßen Fertigformulierungen werden durch Abmischen der festen Wirkstoffe oder deren wäßrigen Hochkonzentrate mit den Hilfsstoffen erhalten. Vorzugsweise werden beispielsweise wäßrige Wirkstofflösungen in einer Konzentration von 50 - 80 % vorgelegt und unter Rühren die Hilfsstoffe eingearbeitet. Die Konzentration der Wirkstoffe in den Hochkonzentraten liegt bei etwa mindestens 100 g/l, vorzugsweise mindestens 200 g/l, bis maximal etwa 700 g/l, vorzugsweise im Bereich zwischen 200 - 600 g/l.

Wirkstoffkonzentrate im Sinne der vorliegenden Erfindung sind wäßrige Lösungen von Wirkstoffen und den erfindungsgemäßen Additiven, wobei die Gesamtkonzentration an Wirkstoffen mindestens 20 % (Gewichtsprozent pro Volumeneinheit, z.B. 200 g/l), insbesondere mindestens 30 % (300 g/l) beträgt. Die Gesamtkonzentration an Wirkstoffen beträgt maximal bis zu 70 % (700 g/l), bevorzugt bis zu 60 % (600 g/l). Die Konzentrate enthalten mindestens einen Wirkstoff der Formel I. Die Wirkstofflösung kann neben der Wirkstoffen der Formel I auch andere Wirkstoffe zur Behandlung von Pflanzen enthalten, wie z.B. wachstumsregulierende Wirkstoffe, Düngemittel, Herbizide oder Fungizide. Der Gehalt an Verbindungen der Formel I beträgt bei Mischungen mindestens 5 %, bevorzugt mindestens 10 % oder 20 %. Als weitere Wirkstoffe können beispielsweise andere Wirkstoffe, wie z.B. Herbizide, Fungizide oder wachstumsregulierende Wirkstoffe, eingesetzt werden. Bevorzugt kommt als weiterer Wirkstoff Etephon (2-Chlorethyl-phosphonsäure) in Frage. Die Konzentration dieses Wirkstoffes beträgt beispielsweise 50 - 400 g/l (5 - 40 %) in der Fertigformulierung, d.h. im wäßrigen Konzentrat.

Bevorzugte Wirkstoffe der Formel I sind N,N,N-Trimethyl-N-ß-chlorethyl-ammoniumchlorid (CCC) oder N,N-Dimethylpiperidiniumchlorid. CCC wird beispielsweise in Form eines Hochkonzentrates von 750 g/l zur Herstellung der erfindungsgemäßen Zusammensetzungen eingesetzt. Ausgehend von dieser hochkonzentrierten Lösung werden die erfindungsgemäßen Wirkstoffkonzentrate durch Verdünnung mit den wäßrigen Lösungen der Zusatzstoffe aus der Gruppe b1), b2) oder b3) durch Verdünnung hergestellt. Im Falle von CCC werden beispielsweise 8 Volumenteile des Hochkonzentrates (750 g/l) mit 2 Volumenteilen der wäßrigen Lösung des ausgewählten Zusatzstoffes vermischt, so daß eine Wirkstoffkonzentration von CCC im erfindungsgemäßen Wirkstoffkonzentrat von 600 g/l (60 %) resultiert. Die wäßrigen Lösungen der ausgewählten Zusatzstoffe werden in Form der Handelsware (vgl. Herstellerangaben in Tabelle 1.2) eingesetzt.

Die erfindungsgemäßen Mittel können bevorzugt durch Spritzung über das Blatt zugeführt werden. Infolge der hohen Pflanzverträglichkeit kann die Aufwandmenge stark variiert werden.

Anhand von Vergleichsversuchen konnte gezeigt werden, daß unter Verwendung von Additiven, die keine Alkylglucoside oder Verbindungen der Formel II oder III sind, keine guten oder nicht hinreichend befriedigende Mischverträglichkeiten mit den Wirkstoffen der Formel I erzielt werden können.

Folgende Versuche erläutern exemplarisch die vorliegende Erfindung und beschreiben die entsprechenden Formulierungen:

### Beispiel 1

### Allgemeines Herstellungsverfahren

Zu 8 Teilen eines wäßrigen Wirkstoffkonzentrates werden 1 - 4 Teile des Additives (s. Tabellen 1.1 und 1.2) in wäßriger Lösung zugesetzt und 15 Minuten kräftig durchgerührt. Die zugesetzten Additive werden in Form der Handelsprodukte mit den vom Hersteller empfohlenen Anwendungsempfehlungen eingesetzt. Bei den Handelsprodukten handelt es sich zumeist um wäßrige Konzentrate, die die jeweiligen Additive in bestimmten vorgegebenen Konzentrationen enthalten. Man läßt die Lösung 10 Minuten bei Raumtemperatur stehen. Anschließend wird die Homogenität der Formulierung bewertet.

### Tabelle 1.1

Zusammenstellung der untersuchten Additive (Vergleichsbeispiele)

| **Additiv** | **Handelsbezeichnung** | **Emulgator-Typ / Chemische Bezeichnung** |
|---|---|---|
| A 01 | Tween® 20 | Sorbitoleat x 20 EO |
| A 02 | Citowett® | Alkylphenol-ethoxylat |
| A 03 | Synperonic® 10/7 | i- C₁₀ Oxoalkohol X 10 EO |
| A 04 | Silwett® L-77 | Heptamethyltrisiloxanpolyether |
| A 05 | Agral® 90 | Nonylphenolethoxilat |
| A 06 | Montane 20 | Sorbitan-mono-laureat |
| A 07 | HOE S 3474 | Tristyrolphenol x 20 EO |
| A 08 | Pluronic® PE 6400 | PO-EO-Biockpolymerisat mit 40 % EO; |
| A 9 | Emulan® EL | Rizinusölethoxylat |
| A 10 | Emulan® TO 2080 | Fettalkoholethoxilat |
| A 11 | Lutensit® AE- P | Saurer Phosphorsäureester |
| A 12 | Lutensol® A 3 N | C_{12- 14}- Fettalkohol x 3 EO |
| A 13 | Lutensol® AO 5 | C_{13- 15}- Oxoalkohol x 5 EO |
| A 14 | Lutensol® AT 11 | C_{16- 18}- Fettalkohol x 11 EO |
| A 15 | Lutensol® ON 30 | C₁₀- Oxoalkohol x 3 EO |
| A 16 | Lutensol® TO 3 | C₁₃- Oxoalkohol x 3 EO |
| A 17 | Lutensol® FSA 10 | Fettsäureamid x 10 EO |
| A 18 | Lutensol ®FA 12 | Fettamin x 12 EO |
| A 19 | Plurafac® LF 131 | PO- EO- Blockpolymerisat; endgruppenverschlossen |
| A 20 | 91 995―81―2 Rewoquat® WE 18 | Di―(talgcarboxyethyl)―hydroxyethyl―methylammonium―methosulfat |
| A 21 | 86 088―85―9 Rewoquat® W 90 | 1―Methyl―2―nortalgalkyl―3―talgfettsäure―amidoethyl―imidazolinium―methosulfat |
| A 22 | 92 201―88―2 Rewoquat® W 575 PG | 1―Methyl―2―norpalmalkyl―3―palmfett― säure―amidoethyl―imidazolinium―metho― sulfat |
| A 23 | 94 944―77―1 Rewoquat® W 3690 PG | 1―Methyl―2―noroleyl―3―oleylamidoethyl―imidazolinium―metho―sulfat |
| A 24 | 91 995-81-2 Rewoquat® WE 28 | Di-(palmcarboxyethyl)-hydroxyethylmethylammonium-methosulfat |
| A 25 | Pluronic® RPE 2520 | EO-PO-Blockpolymer mit 20 % EO |
| A 26 | Pluronic® RPE 3110 | EO-PO-Blockpolymer mit 10 % EO |

Erläuterungen zu den verwendeten Additiven A 01- A 21:
A 01 und A 03: Produkte der Fa. ICI Surfactants bzw. Uniqema
A 06: Produkt der Fa. Seppic (Paris)
A 07: Produkt der Fa. Hoechst-Clariant
A 02, A 08 - A 19, A 25, A 26: Produkte der Fa. BASF AG
A 20 - A 24: quarternäre Ammoniumsalze, Produkte der Fa. Witco.

Tween®: Marke der ICI America, Inc. für die Polyoxyethylen-Derivate der Sorbitanester mit gleicher Kennziffer; internat. Freiname: Polysorbat (früher: Sorbimacrogol). Einzelne Tween11®-Marken sind: Polyethoxysorbitanlaurat (Tween® 20, Tween® 21), -palmitat (Tween® 40), -stearat (Tween® 60, Tween® 61), etc.. Die meisten Tween®-Typen sind ölige Flüssigkeiten (Ausnahme Tween® 60, 61, 65) mit ausgezeichneten physiologischen und toxikologischen Eigenschaften, die aufgrund ihrer hohen Hydrophilie (HLB 10-16,7) in Wasser löslich oder dispergierbar sind. Sie sind zudem löslich in vielen org. Lösungsmitteln. Sie werden bevorzugt für die Herstellung von O/W-Emulsionen und in großem Umfang in der Kosmetik, Pharmazie und vielen anderen Industriezweigen als nichtionische hydrophile Emulgatoren, Lösungsvermittler oder Netzmittel eingesetzt. Bezugsquellen: Aldrich; Merck; Riedel.

Citowett®: Netz- und Haftmittel auf der Basis Alkylarylpolyglykolether. Bezugsquelle: BASF Aktiengesellschaft.

Pluronic®: Marke der BASF für flüssige oder feste nichtionische Polyalkylenglykole auf der Basis von Blockpolymeren aus Ethylenund Propylenoxid. Lit.: Janistyn 1, 725-729.

Emulan®: Sortiment von nichtionischen Emulgatoren für die chemisch-technische Industrie auf der Basis von Fettalkoholen, Alkylphenol oder Fettsäuren und ihren Derivaten zum Emulgieren von Lösungsmitteln, Wachsen, Fetten und fetten Ölen, Paraffin und Mineralölen, zum Stabilisieren von Emulsionen und Dispersionen und als Rostschutz. Bezugsquelle: BASF.

Lutensit®: Sortiment von anionischen Tensiden oder von Mischungen anionischen mit nichtionischen Tensiden für die Wasch- und Reinigungsmittel- und die chemisch-technische Industrie. Die Aniontenside sind Alkylbenzolsulfonate, Alkylphenolethersulfate, Fettalkoholetherphosphate, Alkylsulfonate oder sulfierte Fettsäure-Kondensationsprodukte. Bezugsquelle: BASF.

Lutensol®: Nichtionische Tenside für die Wasch- und Reinigungsmittel- und chemisch-technische Industrie auf der Basis ethoxylierter Fettalkohole, Alkylphenole oder Fettamine sowie Alkylglucoside (s.a. Einzelstichwörter). Bezugsquelle: BASF.

Plurafac® LF: Marke der BASF. Fettalkoholalkoxylate; nichtionische, schaumarme und schaumdämpfende Tenside für Wasch- u. Reinigungsmittel. Bezugsquelle: BASF.

**Tabelle 1.2**

| Zusammenstellung der erfindungsgemäß zugesetzten Additive | | |
|---|---|---|
| **Additiv** | **Handelsbezeichnung** | **Emulgator-Typ / Chemische Bezeichnung** |
| B 01 | AG 6202 | 2-Ethyl-hexyl-glucosid |
| B 02 | Lutensol® GD 70 | Fettalkohol-glucosid |
| B 03 | Simusol® SL 8 | Alkyl-glucosid CAS-Nr. 68515-73-1 |
| B 04 | Simusol® SL 62 | Alkyl-glucosid |
| B 08 | Wettol® EM 1 | Dodecylbenzolsulfosäure-Ca-Salz |
| B 09 | Wettol® EM 11 | Ca-Alkylarylsulfonat |
| B 10 | Emulphor® OPS 25 | Octylphenol-(EO)₂₅-sulfat, Na-Salz |
| B 11 | Lutensit® A-E S | Isononylphenol-tetraethoxysulfat, Na-Salz |
| B 12 | Lutensit® A- PS | Alkylsulfonat, Na- salz |
| B 13 | ALBN 50 | Dodecylbenzolsulfonat, Na-Salz |

Erläuterungen zu den verwendeten Additiven:
a) B 01 - B 04: Additive aus der Gruppe der Alkylglucoside
   B 01: Produkt der Fa. Akzo. Die Handelsware enthält das Additiv 2-Ethyl-hexyl-glucosid in einer Konzentration von ca. 65 % in Wasser.
   B 02, B 07, B 08: Produkt der Fa. BASF AG.
   B 02: Die Handelsware enthält das Additiv in einer Konzentration von ca. 65 % in Wasser.
   B 03 und B 04: Produkte der Fa. Seppic (Paris)
b) B 08 - B 13: Additive aus der Gruppe der Sulfate und Sulfonate

Simulsol®: Alkylpolyglykolether, Alkylpolyglykolester und Alkanolamid-Ethylenoxid-Addukte von partiell ungesättigten Fettalkoholen, Öl- und Fettsäuren auf Basis nachwachsender natürlicher Fettrohstoffe. Verwendung: Tenside zur Herstellung von Wasch- u. Reinigungsmitteln oder als Grundstoffe zur Formulierung von Emulgator-Systemen. Bezugsquelle: Henkel, Deutschland.

Wettol®: Emulgatoren, Netz- u. Dispergiermittel zur Formulierung von emulgierbaren Konzentratraten bzw. von Spritzpulvern als Pflanzenschutzmittel. Bezugsquelle: BASF.

Emulphor®: Sortiment von anionischen Emulgatoren für die chemisch-technische Industrie auf der Basis von Alkylbenzolsulfonaten bzw. Ethersulfaten. Bezugsquelle: BASF.

### Beispiel 2

### (Vergleichsbeispiele)

Nach dem allgemeinen Herstellungsverfahren wie in Beispiel 1 beschrieben werden zu 8 Teilen einer hochkonzentrierten Lösung des Wirkstoffes CCC mit einer Konzentration von 750 g/l jeweils die in der Tabelle angegebenen Teile der Additive zugesetzt. Die Ergebnisse sind Tabelle 2.1 zu entnehmen.

**Tabelle 2.1**

| Homogenität der wäßrigen Mischungen | | | |
|---|---|---|---|
| Versuch Nr. | Additiv | Anteile | Homogenität |
| 2.1 | A 01 | 2 | zweiphasig |
| 2.2 | A 02 | 1 | zweiphasig |
| 2.3 | A 03 | 2 | zweiphasig |
| 2.4 | A 04 | 1 | zweiphasig |
| 2.5 | A 05 | 1 | zweiphasig |
| 2.6 | A 06 | 2 | zweiphasig |
| 2.7 | A 07 | 2 | zweiphasig |
| 2.8 | A 08 | 1 | zweiphasig |
| 2.9 | A 09 | 2 | zweiphasig |
| 2.10 | A 10 | 2 | zweiphasig |
| 2.11 | A 11 | 2 | zweiphasig |
| 2.12 | A 12 | 2 | zweiphasig |
| 2.13 | A 13 | 2 | zweiphasig |
| 2.14 | A 14 | 2 | zweiphasig |
| 2.15 | A 15 | 2 | zweiphasig |
| 2.16 | A 16 | 2 | zweiphasig |
| 2.17 | A 17 | 2 | zweiphasig |
| 2.18 | A 18 | 2 | zweiphasig |
| 2.19 | A 19 | 2 | zweiphasig |
| 2.20 | A 20 | 2 | hochviskose, inhomogene Masse |
| 2.21 | A 21 | 2 | hochviskose, inhomogene Masse |
| 2.22 | A 22 | 2 | hochviskose, inhomogene Masse |
| 2.23 | A 23 | 2 | hochviskose, inhomogene Masse |
| 2.24 | A 24 | 2 | hochviskose, inhomogene Masse |
| 2.25 | A 25 | 2 | zweiphasig |
| 2.26 | A 26 | 2 | zweiphasig |

### Beispiel 3

### Additive: Alkylglycoside

Nach dem Verfahren wie in Beispiel 2 werden zu 8 Teilen einer hochkonzentrierten Lösung des Wirkstoffes CCC mit einer Konzentration von 750 g/l jeweils die in der Tabelle angegebenen Teile erfindungsgemäßen Alkylglucoside bzw. weitere Hilfsstoffe gegeben. Die Ergebnisse sind Tabelle 3.1 zu entnehmen. Die Konzentration des Wirkstoffes CCC in der mit Additiven versetzten Lösung beträgt im Fall der Mischung von 8 Teilen Wirkstoffkonzentrat mit 2 Teilen der Additiven (Mischungsverhältnis 8:2) 600 g/l.

**Tabelle 3.1**

| Homogenität der wäßrigen Mischungen | | | | | |
|---|---|---|---|---|---|
| Versuch Nr. | Additiv (vgl. Tab. 1.2) | | weitere Additive (vgl. Tab. 1.1 und 1.2) | | Homogenität |
| | Typ | Anteile | Typ | Anteile | |
| | | | | | |
| 3.1 | B 01 | 2 | - | - | klare homogene Lösung |
| 3.2 | B 01 | 1 | B 03 | 1 | klare homogene Lösung |
| 3.3 | B 01 | 1 | B 09 | 1 | klare homogene Lösung |
| 3.4 | B 01 | 1,2 | A 08 | 0,8 | klare homogene Lösung |
| 3.5 | B 02 | 2 | - | - | klare homogene Lösung |
| 3.6 | B 04 | 2 | - | - | klare homogene Lösung |
| 3.7 | B 01 | 1 | A 06 | 1 | klare homogene Lösung |
| 3.8 | B 01 | 0,8 | A 20 | 1,2 | klare homogene Lösung |

### Beispiel 4

Nach dem Verfahren wie in Beispiel 2 werden zu 8 Teilen einer hochkonzentrierten Lösung des Wirkstoffes CCC mit einer Konzentration von 750 g/l jeweils die in der Tabelle angegebenen Teile erfindungsgemäßen Sulfonate der Formel II bzw. weitere Hilfsstoffe gegeben. Die Ergebnisse sind Tabelle 4.1 zu entnehmen.

**Tabelle 4.1**

| Additive: Sulfonate Homogenität der wäßrigen Mischungen | | | | | |
|---|---|---|---|---|---|
| Versuch Nr. | Additiv | | weitere Additive | | Homogenität |
| | Typ | Anteile | Typ | Anteile | |
| | | | | | |
| 4.1 | B 09 | 2 | - | - | klare homogene Lösung |
| 4.2 | B 09 | 1,2 | | | leicht trüb, homogen; nach Filtration: klar |
| 4.3 | B 09 | 1,2 | | | trübe, homogene Lösung; nach Filtration: klar |
| 4.4 | B 10 | 1 | B 01 | 1 | klare Lösung |
| 4.5 | B 11 | 1 | B 01 | 1 | klare Lösung |
| 4.6 | B 13 | 1 | B 01 | 1 | klare Lösung |
| 4.7 | B 10 | 2 | | | klare Lösung |
| 4.8 | B 11 | 2 | | | klare Lösung |
| 4.9 | B 08 | 2 | 2-Ethylcyclohexanol* | 30 % | klare Lösung |
| 4.10 | B 12 | 2 | | | klare Lösung |

| | | | | | |
|---|---|---|---|---|---|
| * 2-Ethyl-cyclohexanol ist 30 %ig im BO8-Additiv als Lösemittel enthalten | | | | | |

Bei den Versuchen 4.2 und 4.3 konnte nach Filtration von produktionsbedingt enthaltenen Verunreinigungen klare, stabile Lösungen erhalten werden. Im Fall des Additivs B12 (Versuch Nr. 4.10) wird vorteilhaft bei höheren Temperaturen (im Bereich von 29 - 33 °C) eine klare Lösung erhalten.

### Beispiel 5

Zur Untersuchung und Bestimmung der wachstumsregulierenden Eigenschaft der Prüfsubstanzen wurden Testpflanzen auf ausreichend mit Nährstoffen versorgtem Kultursubstrat in Kunststoffgefäßen (ca. 12,5 cm Durchmesser; Volumen ca. 500 ml) angezogen. Im Nachauflaufverfahren wurden die zu prüfenden Substanzen in wäßriger Aufbereitung auf die Pflanzen gesprüht. Die beobachtete wachstumsregulierende Wirkung wurde bei Versuchsende durch Wuchshöhenmessung belegt. Die so gewonnenen Meßwerte wurden zur Wuchshöhe der unbehandelten Pflanzen in Relation gesetzt.

Gleichlaufend zur Reduzierung des Längenwachstums stieg die Farbintensität der Blätter an. Der erhöhte Chlorophyllgehalt läßt eine ebenfalls erhöhte Photosyntheserate und damit eine erhöhte Ertragsbildung erwarten.

### Beispiel 6

Wie in Beispiel 5 beschrieben wurden biologische Versuche zur Untersuchung der wachstumsregulierenden Eigenschaften der erfindungsgemäßen Zusammensetzungen unter Verwendung von Alkyl-glucosid-haltigen Additven durchgeführt (Formulierungen aus den Beispielen 3.1 und 3.4). Die Einzeldaten sind in den folgenden Tabellen zu entnehmen, wobei die Konzentration in mg Wirkstoff pro Gefäß (WS/Gef.) angegeben ist.

**Tabelle 6.1**

| Wuchshöheneinkürzung bei Sommerweizen und Sommergerste | | | | |
|---|---|---|---|---|
| | **Wuchshöheneinkürzung reL (%) zur unbehandelten Kontrolle bei folgenden Aufwandmengen (WS/Gef.) des Wirkstoffs CCC für Sommerweizen (SW)** | | | |
| **Formulierung** | 2,0 SW | 1,5 SW | 1,0 SW | 0,5 SW |
| Cycocel 720 (Vergleichsprodukt) | 74,0 | 76,5 | 78,0 | 83,5 |
| 3.1 | 67,0 | 69,5 | 71,0 | 77,0 |
| 3.4 | 68,0 | 71,0 | 71,0 | 74,0 |
| Cycocel® 720, Verkaufsprodukt der BASF AG, enthaltend 720 g/l CCC. (Abkürzungen: WS = Wirkstoff; SW = Sommerweizen). | | | | |

Wie aus Tabelle 6.1 zu entnehmen ist, bewirken die erfindungsgemäßen Formulierungen 3.1 und 3.4 bei gleicher Aufwandmenge im Vergleich zu dem Handelsprodukt Cycocel 720 eine stärkere Wuchshöheneinkürzung für Sommerweizen.

### Beispiel 7

Analog zu Beispiel 6 wurden biologische Versuche mit erfindungsgemäßen Formulierungen nach Beispiel 4 durchgeführt.

**Tabelle 7.1**

| Wuchshöheneinkürzung von Sommerweizen und Sommergerste | | |
|---|---|---|
| | **Wuchshöheneinkürzung rel. (%) zur unbehandelten Kontrolle bei folgenden Aufwandmengen in Kg/ha des Wirkstoffs CCC für Sommerweizen (SW)** | |
| **Formulierung** | 1,0 SW | 0,5 SW |
| Cycocel® 720 (Vergleichsprodukt) | 84,0 | 91,0 |
| 4.1 | 78,0 | 81,0 |
| 4.2. | 81,0 | 82,5 |
| 4.3 | 79,5 | 82,5 |
| 4.4 | 81,0 | 82,5 |
| 4.5 | 82,5 | 82,5 |

### Beispiel 8

### Lagerstabilität additivhaltiger Wirkstofflösungen bei höheren Temperaturen

Es wurde eine wäßrige wirkstoffhaltige Lösung der beiden Wirkstoffe CCC (Gehalt: 265 g/kg) und Ethephon (Gehalt: 132 g/kg) mit verschiedenen Additiven gemäß Tabelle 1.2 hergestellt. Die Lagerstabilität wurde bei 54 °C nach 14 Tagen bestimmt.

**Tabelle 8.1**

| Lagerstabilität bei 54 °C nach 14 Tagen Wirkstoff A: CCC; Wirkstoff B: Ethephon | | | | | | |
|---|---|---|---|---|---|---|
| Versuch Nr. | Additiv (vgl. Tab. 1.2) [g/kg] | | weitere Additive (vgl. Tab. 1.2) [g/kg] | | Stabilität Wirkstoff A [%] | StabilitätWirkstoff B [%] |
| 1 | B 01 | 250 | - | - | 100 | 97,3 |
| 2 | B 01 | 150 | PE 6400 | 100 | 98,4 | 99,4 |
| 3 | B 09 | 250 | - | - | 99,2 | 97,2 |
| 4 | B 10 | 250 | - | - | 100 | 98 |
| 5 | B 11 | 250 | - | - | 100 | 100 |
| 6 | B 12 | 250 | - | - | 100 | 97 |

Die Ergebnisse zeigen, daß die Wirkstoffe A und B auch bei höheren Temperaturen und bei Lagerung über einen Zeitraum von 14 Tagen unter Zusatz der erfindungsgemäßen Additive stabil sind.

## Patentansprüche

1. Wäßrige, homogene Zusammensetzung eines Wirkstoffkonzentrates zur Beeinflussung des Pflanzenwachstums mit einer Wirkstoffkonzentration von mindestens 20 % enthaltend
a) mindestens einen Wirkstoff der Formel I 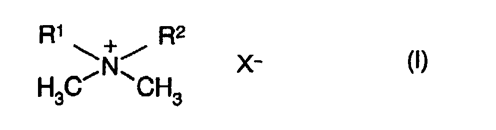
R¹ C₁-C₄-Alkyl;
R² C₁-C₄-Alkyl, Cyclopentenyl, Halogen-C₁-C₆-Alkyl; oder R¹ und R² zusammen einen Rest -(CH₂)₅-, -(CH₂)₂-O-(CH₂)₂- oder -(CH₂)-CH=CH-(CH₂)-NH- darstellen;
X eine anionische Gruppe;
und
b) mindestens einen Hilfsstoff ausgewählt aus der Gruppe der
b1) Alkylglucoside,
b2) Alkylsulfonate oder Alkylarylsulfonate der Formel II
R³-SO₃⁻ M^{(+,++)} (II),
wobei R³ eine aliphatische Gruppe mit 6-24 Kohlenstoffatomen, C₆-C₁₆-Alkyl-phenoxy-polyethoxy, C₁-C₁₆-Alkyl-phenyl, C₁-C₁₆-Alkyl-naphthyl und M eine ein- oder zweiwertige kationische Gruppe bedeutet.

2. Zusammensetzung nach Anspruch 1, **dadurch gekennzeichnet, daß** die Gesamtkonzentration an Wirkstoffen 30 - 70 % beträgt.

3. Zusammensetzung nach Anspruch 1 oder 2, **dadurch gekennzeichnet, daß** die Konzentration des Wirkstoffes der Formel I 5 - 60 % beträgt.

4. Zusammensetzung nach einem der Ansprüche 1 - 3 enthaltend als Hilfstoff ein Alkylglucosid ausgewählt aus der Gruppe der C₄-C₂₄-Alkyl-glucoside, Fettalkyl-glucoside oder Polyglucoside.

5. Zusammensetzung nach Anspruch 4 enthaltend C₈ - C₁₂-Alkylglucoside, insbesondere Ethylhexylglucosid.

6. Zusammensetzung nach einem der Ansprüche 1 - 5 enthaltend als Hilfsstoff ein Alkylsulfonat oder Alkylarylsulfonat der Formel II.

7. Zusammensetzung nach einem der Ansprüche 1 - 6 enthaltend ferner bis zu 30% anionische, kationische oder nicht-ionische Tenside.

8. Zusammensetzung nach einem der Ansprüche 1 - 7 enthaltend ferner bis zu 35% an weiteren landwirtschaftlich nutzbaren und/oder wirkungssteigernden Ammonium- oder Düngesalzen.

9. Zusammensetzung nach einem der Ansprüche 1 - 8 enthaltend ferner bis zu 30% Alkylcarbonsäuren.

10. Zusammensetzung nach einem der Ansprüche 1 - 9 enthaltend N,N,N-Trimethyl-N-ß-chlorethyl-ammoniumchlorid (CCC) als Wirkstoff der Formel I.

11. Zusammensetzung nach einem der Ansprüche 1 - 10 enthaltend N,N-Dimethylpiperidiniumchlorid als Wirkstoff der Formel I.

12. Zusammensetzung nach einem der Ansprüche 1 - 11 enthaltend Ethephon als weiteren Wirkstoff zur Behandlung von Pflanzen.

13. Verfahren zur Beeinflussung des Pflanzenwachstums, **dadurch gekennzeichnet, daß** man die Pflanzen mit einer Zusammensetzung nach einem der Ansprüche 1 - 12 behandelt.

14. Verfahren nach Anspruch 13, wobei die Pflanzen mit einer Aufwandmenge eines Wirkstoffes von weniger als 1,5 kg/ha pro Applikation behandelt werden.

15. Verfahren nach Anspruch 14, wobei die Aufwandmenge 0,1-1 kg/ha beträgt.

16. Verwendung mindestens eines Hilfsstoffes ausgewählt aus der Gruppe der
a) Alkylglucoside,
b) Alkylsulfonate oder Alkylarylsulfonate der Formel II
R³-SO₃- M^{(+,++)} (II),
wobei R³ eine aliphatische Gruppe mit 6-24 Kohlenstoffatomen, C₆-C₁₆-Alkyl-phenoxy-polyethoxy, C₁-C₁₆-Alkyl-phenyl, C₁-C₁₆-Alkyl-naphthyl und M eine ein- oder zweiwertige kationische Gruppe bedeutet;
zur Verringerung der Aufwandmenge bei der landwirtschaftlichen Nutzung eines Wirkstoffes der Formel I wie in Anspruch 1 angegeben.

17. Verwendung mindestens eines Hilfsstoffes ausgewählt aus der Gruppe der a) Alkylglucoside oder b) Alkylsulfonate oder Alkylarylsulfonaten der Formel II wie in Anspruch 16 angegeben zur Herstellung von stabilen, einphasigen, wäßrigen Wirkstoffkonzentraten enthaltend einen Wirkstoff der Formel I wie in Anspruch 1 angegeben.

## Claims

1. An aqueous homogeneous composition of an active compound concentrate for regulating plant growth having an active compound concentration of at least 20%, which comprises
a) at least one active compound of the formula I 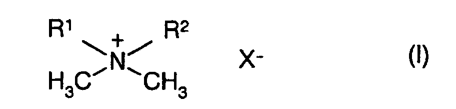
R¹ is C₁-C₄-alkyl;
R² is C₁-C₄-alkyl, cyclopentenyl, halo-C₁-C₆-alkyl; or
R¹ and R² together are a radical -(CH₂)₅-,
-(CH₂)₂-O-(CH₂)₂- or
-(CH₂)-CH=CH-(CH₂)-NH-;
X is an anionic group;
and
b) at least one auxiliary selected from the group consisting of
b1) alkylglucosides,
b2) alkylsulfonates or alkylarylsulfonates of the formula II
R³-SO₃⁻ M^{(+,++)} (II),
where R³ is an aliphatic group having 6-24 carbon atoms, C₆-C₁₆-alkylphenoxypolyethoxy,
C₁-C₁₆-alkylphenyl, C₁-C₁₆-alkylnaphthyl and M is a mono- or divalent cationic group.

2. A composition as claimed in claim 1, wherein the total concentration of active compounds is 30 - 70%.

3. A composition as claimed in claim 1 or 2, wherein the concentration of the active compound of the formula I is 5 - 60%.

4. A composition as claimed in any of claims 1 - 3 which comprises, as auxiliary, an alkylglucoside selected from the group of the C₄-C₂₄-alkylglucosides, fatty alkylglucosides or polyglucosides.

5. A composition as claimed in claim 4 which comprises C₈ - C₁₂-alkylglucosides, in particular ethylhexylglucoside.

6. A composition as claimed in any of claims 1 - 5 which comprises, as auxiliary, an alkylsulfonate or alkylarylsulfonate of the formula II.

7. A composition as claimed in any of claims 1 - 6 which additionally comprises up to 30% of anionic, cationic or nonionic surfactants.

8. A composition as claimed in any of claims 1 - 7 which additionally comprises up to 35% of other agriculturally useful and/or activity-enhancing ammonium or fertilizer salts.

9. A composition as claimed in any of claims 1 - 8 which additionally comprises up to 30% of alkylcarboxylic acids.

10. A composition as claimed in any of claims 1 - 9 which comprises N,N,N-trimethyl-N-β-chloroethylammonium chloride (CCC) as active compound of the formula I.

11. A composition as claimed in any of claims 1 - 10 which comprises N,N-dimethylpiperidinium chloride as active compound of the formula I.

12. A composition as claimed in any of claims 1 - 11 which comprises ethephon as further active compound for treating plants.

13. A process for regulating plant growth, which comprises treating the plants with a composition as claimed in any of claims 1 - 12.

14. A process as claimed in claim 13, wherein the plants are treated at an application rate of an active compound of less than 1.5 kg/ha per application.

15. A process as claimed in claim 14, wherein the application rate is 0.1 - 1 kg/ha.

16. The use of at least one auxiliary selected from the group of the
a) alkylglucosides,
b) alkylsulfonates or alkylarylsulfonates of the formula II
R³-SO₃⁻ M^{(+,++)} (II),
where R³ is an aliphatic group having 6-24 carbon atoms, C₆-C₁₆-alkyl-phenoxypolyethoxy, C₁-C₁₆-alkyl-phenyl, C₁-C₁₆-alkyl-naphthyl and M is a mono- or divalent cationic group;
to reduce the application rate in the agricultural utilization of an active compound of the formula I, as specified in claim 1.

17. The use of at least one auxiliary selected from the group of the a) alkylglucosides, b) alkylsulfonates or alkylarylsulfonates of the formula II, as specified in claim 16, for preparing stable monophasic aqueous active compound concentrates which comprise an active compound of the formula I, as specifieid in claim 1.

## Revendications

1. Composition homogène aqueuse d'un concentrat de substance active pour influencer la croissance de plantes comprenant une concentration de substance active d'au moins 20 %, contenant
a) au moins une substance active répondant à la formule I 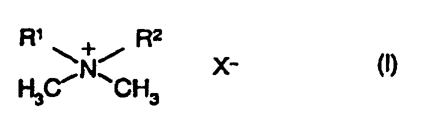 dans laquelle
R¹ représente un groupe alkyle en C₁ - C₄,
R² représente un groupe alkyle en C₁ - C₄, un groupe cyclopentényle, un groupe halogénalkyle en C₁ - C₆ ; ou bien
R¹ et R² représentent ensemble un radical -(CH₂)₅-, -(CH₂)₂-O-(CH₂)₂- ou -(CH₂)-CH=CH-(CH₂)-NH- ;
X représente un groupe anionique ;
et
b) au moins un adjuvant choisi parmi le groupe comprenant
b1) des alkylglucosides,
b2) des alkylsulfonates ou des alkylarylsulfonates répondant à la formule II
R³-SO₃⁻ M(^{+,++}) (II)
dans laquelle R³ représente un groupe aliphatique contenant de 6 à 24 atomes de carbone, un groupe alkyl(en C₆ - C₁₆)phénoxy-polyéthoxy, un groupe alkyl(en C₁ - C₁₆)phényle, un groupe alkyl(en C₁ - C₁₆)naphtyle et M représente un groupe cationique monovalent ou divalent.

2. Composition selon la revendication 1, **caractérisée en ce que** la concentration totale de la substance active s'élève de 30 à 70 %.

3. Composition selon la revendication 1 ou 2, **caractérisée en ce que** la concentration de la substance active répondant à la formule I s'élève de 5 à 60 %.

4. Composition selon l'une quelconque des revendications 1 à 3, contenant, à titre d'adjuvant, un alkylglucoside choisi parmi le groupe comprenant des alkyl(en C₄ - C₂₄)glucosides, des alkylglucosides gras ou des polyglucosides.

5. Composition selon la revendication 4, contenant des alkyl(en C₈ - C₁₂)-glucosides, en particulier de l'éthylhexylglucoside.

6. Composition selon l'une quelconque des revendications 1 à 5, contenant, à titre d'adjuvant, un alkylsulfonate ou un alkylarylsulfonate répondant à la formule II.

7. Composition selon l'une quelconque des revendications 1 à 6, contenant en outre, des agents tensioactifs anioniques, cationiques ou non ioniques jusqu'à concurrence de 30 %.

8. Composition selon l'une quelconque des revendications 1 à 7, contenant en outre, jusqu'à concurrence de 35 %, des sels d'ammonium ou d'engrais supplémentaires utiles dans l'agriculture et/ou augmentant l'activité.

9. Composition selon l'une quelconque des revendications 1 à 8, contenant en outre des acides alkylcarboxyliques jusqu'à concurrence de 30 %.

10. Composition selon l'une quelconque des revendications 1 à 9, contenant du chlorure de N,N,N-triméthyl-N-β-chloroéthyl-ammonium (CCC) à titre de substance active répondant à la formule I.

11. Composition selon l'une quelconque des revendications 1 à 10, contenant du chlorure de N,N-diméthylpipéridinium à titre de substance active répondant à la formule I.

12. Composition selon l'une quelconque des revendications 1 à 11, contenant de l'ethephon à titre de substance active supplémentaire pour le traitement de plantes.

13. Procédé pour influencer la croissance de plantes, **caractérisé en ce qu'**on traite les plantes avec une composition selon l'une quelconque des revendications 1 à 12.

14. Procédé selon la revendication 13, dans lequel on traite les plantes avec une quantité d'épandage d'une substance active à concurrence de moins de 1,5 kg/ha par application.

15. Procédé selon la revendication 14, dans lequel la quantité d'épandage s'élève de 0,1 à 1 kg/ha.

16. Utilisation d'au moins un adjuvant choisi parmi le groupe comprenant
a) des alkylglucosides,
b) des alkylsulfonates ou des alkylarylsulfonates répondant à la formule II
R³-SO₃⁻ M(^{+,++}) (II)
dans laquelle R³ représente un groupe aliphatique contenant de 6 à 24 atomes de carbone, un groupe alkyl(en C₆ - C₁₆)phénoxy-polyéthoxy, un groupe alkyl(en C₁ - C₁₆)phényle, un groupe alkyl(en C₁ - C₁₆)naphtyle et M représente un groupe cationique monovalent ou divalent,
pour diminuer la quantité d'épandage lors de l'utilisation agricole d'une substance active répondant à la formule I telle qu'indiquée à la revendication 1.

17. Utilisation d'au moins un adjuvant choisi parmi le groupe a) des alkylglucosides ou b) des alkylsulfonates ou des alkylarylsulfonates répondant à la formule II tel qu'indiqué à la revendication 16, pour la préparation de concentrats de substances actives aqueux, monophasiques, stables contenant une substance active répondant à la formule I telle qu'indiquée à la revendication 1.
